# EUROPÄISCHE PATENTSCHRIFT

(11) **EP 3 458 290 B1**
(45) Veröffentlichungstag und Bekanntmachung des Hinweises auf die Patenterteilung: **07.07.2021**
(21) Anmeldenummer: 17713612.4
(22) Anmeldetag: 23.03.2017
(51) Int. Cl.: B60G 7/02, B60G 11/10, B60G 9/00

(54) **HALTEBOCK**
HOLDING MOUNT
SUPPORT DE FIXATION

(30) Priorität: 19.05.2016 DE 102016109184
(43) Veröffentlichungstag der Anmeldung: 27.03.2019
(73) Patentinhaber: SAF-HOLLAND GmbH, 63856 Bessenbach (DE)
(72) Erfinder: GALAZIN, Gregory, Muskegon, Michigan 49445 (US); HAMMER, Edward, Muskegon, Michigan 49442 (US)
(74) Vertreter: Müller Schupfner & Partner Patent- und Rechtsanwaltspartnerschaft mbB
(86) Internationale Anmeldenummer: PCT/EP2017/056947
(87) Internationale Veröffentlichungsnummer: WO 2017/198374

(56) Entgegenhaltungen:
- EP-A1- 1 728 654
- EP-A1- 1 911 661
- EP-A1- 3 330 110
- EP-A2- 1 918 135
- DE-A1- 10 308 347
- DE-A1-102010 024 593
- DE-T2- 60 114 386
- DE-U1- 20 011 858
- DE-U1- 20 104 753
- US-B1- 6 659 479
- US-B1- 9 315 222

## Beschreibung

Die vorliegende Erfindung betrifft einen Haltebock, insbesondere von einem oder für einen Nutzfahrzeuganhänger.

Halteböcke der in Rede stehenden Art werden insbesondere dazu verwendet, Fahrwerkskomponenten zu lagern. Die Halteböcke sind hierzu an einer Tragstruktur befestigt, beispielsweise einem Nutzfahrzeugrahmen, wobei sie Öffnungen bzw. Lagerstellen aufweisen, um zum Beispiel einen Längslenker drehbar zu lagern und/oder ein Feder- bzw. Stoßdämpferelement anzuordnen etc. Die bekannten Halteböcke bringen den Nachteil mit sich, dass sie entweder sehr schwer sind, was die zur Verfügung stehende Nutzlast der Fahrzeuge verringert oder auf der anderen Seite nicht die geforderte Steifigkeit/Festigkeit aufweisen.

Die DE 201 04 753 U1, EP 1 728 654 A1, DE 200 11 858 U1 und die US-6,659,479 B1 offenbaren Lagerböcke für Nutzfahrzeuge, welche zwei Seitenwandungen zur schwenkbaren Lagerung eines Längslenkers aufweisen, wobei zwischen den beiden Seitenwandungen ein Versteifungselement angeordnet ist.

Die DE 201 04 753 U1 offenbart den Oberbegriff des Anspruchs 1.

DE 103 08 347 A1, DE 10 2010 024 593 A1, US-9,315,222 B1 und EP 1 918 135 A2 zeigen Lagervorrichtungen zur Lagerung eines Achslenkers, welche zwei Seitenwandungen aufweisen, zwischen welchen der Achslenker schwenkbar gelagert ist.

Die EP 1 911 661 A1 offenbart ein Herstellungsverfahren für einen Lagerbock eines Nutzfahrzeugs.

Es ist daher eine Aufgabe der vorliegenden Erfindung einen Haltebock anzugeben, welcher die vorgenannten Nachteile beseitigt und bei geringem Materialansatz eine sehr steife Befestigung bzw. Anbindung von Fahrwerkskomponenten an eine Tragstruktur sowie eine Vorpositionierung des Einsatzteils relativ zum Haltebock ermöglicht.

Diese Aufgabe wird durch einen Haltebock gemäß Anspruch 1 gelöst. Weitere Vorteile und Merkmale ergeben sich aus den Unteransprüchen sowie der Beschreibung und den beigefügten Figuren.

Erfindungsgemäß umfasst ein Haltebock, insbesondere von einem oder für einen Nutzfahrzeuganhänger, zwei Seitenwände, welche sich entlang einer Hochachse erstrecken, und welche einen Anordnungsbereich formen, zum Anordnen des Haltebocks an ein Tragelement, wobei der Haltebock ein Einsatzteil umfasst, welches einen Verbindungsabschnitt und einen Versteifungsabschnitt aufweist, wobei der Verbindungsabschnitt den Anordnungsbereich mit formt, und wobei sich der Versteifungsabschnitt zur Versteifung zwischen den Seitenwänden erstreckt. Der Versteifungsabschnitt kann sich hierbei im Wesentlichen entlang bzw. parallel der Hochachse erstrecken oder zu dieser geneigt sein, wobei ein Neigungswinkel von bis zu 30°, vorzugsweise bis zu 15° und besonders vorzugsweise bis zu 5° bevorzugt ist. Bei dem Tragelement kann es sich gemäß verschiedenen Ausführungsformen um eine Rahmenstruktur oder einen Teil einer Rahmenstruktur eines Fahrzeugs, insbesondere eines Nutzfahrzeuganhängers, handeln. Alternativ kann das Tragelement aber auch eine Montageplatte sein, welche seinerseits wieder an eine Rahmenstruktur eines Fahrzeugs angeordnet ist/wird. In einer bevorzugten Ausführungsform ist das Tragelement eine Montageplatte, insbesondere aus Stahl, welche an einer Rahmenstruktur oder an einem Teil der Rahmenstruktur, beispielsweise einem Rahmen eines Nutzfahrzeuganhängers, befestigt, insbesondere geschraubt, ist. Bevorzugt ist der Rahmen des Anhängers, umfassend zumindest einen Längsträger, aus Aluminium gefertigt. Im eingebauten Zustand des Haltebocks steht die vorab erwähnte Hochachse im Wesentlichen senkrecht zu einer Fahrbahnebene bzw. zu einer Flächenerstreckung des Tragelements. Die beiden Seitenwände sind in einer bevorzugten Ausführungsform über eine Querwand verbunden. Bevorzugt ist der Haltebock durch ein Umformverfahren hergestellt, insbesondere durch ein Biegen eines zunächst plattenförmigen Bauteils. Der Anordnungsbereich stellt die eigentliche Verbindungsstelle zwischen dem Haltebock und dem Tragelement dar, wobei besonders vorteilhaft ein Teil des Anordnungsbereichs durch das Einsatzteil mit gebildet ist, diesen also mit formt bzw. ausbildet. Gleichzeitig erfüllt das Einsatzteil mit Vorteil eine Versteifungsfunktion, indem es sich zwischen den Seitenwänden entlang oder geneigt der Hochachse erstreckt, wobei es an den Seitenwänden anliegt und diese, insbesondere auch zueinander, abstützt, wodurch bei Belastung ein Knicken, Falten oder Einklappen des Haltebocks verhindert wird. Dabei ist mit *"entlang der Hochachse"* keine konkrete Richtung gemeint bzw. vorgegeben. Der Versteifungsabschnitt kann sich im Wesentlichen parallel aber auch schräg oder geneigt zur Hochachse, ganz allgemein im Wesentlichen in Richtung eines unteren Endes des Haltebocks, erstrecken. Der Versteifungsabschnitt verbindet also mit Vorteil die Seitenwände, während der Verbindungsabschnitt einen Anordnungsbereich mit einer, bevorzugt umfänglich geschlossenen, Kontur formt. Durch diese geschlossene Kontur wird ein, insbesondere umfängliches, Verschweißen des Haltebocks mit dem Tragelement ermöglicht. Es muss also beim Schweißen nicht abgesetzt werden und es müssen keine Kanten oder Stufen geschweißt werden. Der Schweißvorgang kann sozusagen in einem Schritt bzw. "nahtlos" vollzogen werden. Mit Vorteil wird durch die Ausgestaltung des Haltebocks, umfassend das Einsatzteil, welches den Verbindungsabschnitt aufweist und den Anordnungsbereich mit formt, beim Anschweißen des Haltebocks an das Tragelement auch gleichzeitig das Einsatzteil relativ zum Haltebock fixiert. In einem Arbeitsschritt können also beide Komponenten befestigt werden. Der Versteifungsabschnitt, welcher sich innerhalb der Seitenwände erstreckt, kann ebenfalls verschweißt werden, er kann aber auch lediglich formschlüssig innen an den Seitenwänden anliegen. Das Einsatzteil ist, wie der Haltebock als solches, bevorzugt aus Stahl ausgebildet. Besonders vorteilhaft ist, das Einsatzteil als zu den Seitenwänden separates Element auszubilden. In anderen Worten sind das Einsatzteil und die Seitenwände getrennt hergestellt, wobei diese dann miteinander verbunden, insbesondere stoffschlüssig und/oder kraftschlüssig und/oder formschlüssig verbunden, werden können.

Erfindungsgemäß weist der Verbindungsabschnitt des Einsatzteils einen inneren Abschnitt auf, welche sich im Anordnungsbereich zwischen den Seitenwänden erstreckt. Der Verbindungsabschnitt verbindet also die Seitenwände direkt mit einander und liegt hierzu an den Innenflächen der Seitenwände an. Er versteift also insbesondere den Anordnungsbereich des Haltebocks.

Erfindungsgemäß weist der Verbindungsabschnitt einen äußeren Abschnitt auf, welcher im Anordnungsbereich an den Seitenwänden anliegt, insbesondere eine äußere Kontur der Seitenwände schließend. Der äußere Abschnitt liegt also nicht an den Innenflächen der Seitenwände an sondern an den Kanten bzw. Kantenflächen der Seitenwände. Durch diese Ausgestaltung kann, wie erwähnt, eine Außenkontur der Seitenwände, insbesondere im Anordnungsbereich fortgeführt werden. Durch den äußeren Abschnitt kann der Anordnungsbereich bzw. eine Länge des Anordnungsbereichs vergrößert werden, was zu einer zusätzlichen Versteifung der gesamten Anordnung beiträgt. Durch das Weiterführen der Kontur wird außerdem die Schweißverbindung verstärkt, da beispielsweise der äußere Abschnitt bevorzugt eine im Wesentlichen halbkreisförmige Struktur aufweist, um die Seitenwände gleichmäßig zu schließen bzw. zu verbinden.

Erfindungsgemäß sind der äußere Abschnitt und der innere Abschnitt des Einsatzteils über einem Absatz verbunden, wobei eine Größe des Absatzes im Wesentlichen einer Wandstärke des oder der Seitenwände entspricht. Zweckmäßigerweise ist der Verbindungsabschnitt also formschlüssig mit den Seitenwänden verbunden, wodurch eine Arretierung und eine Vorpositionierung des Einsatzteils relativ zum Haltebock ermöglicht werden. Die angesprochene Arretierung bzw. Vorpositionierung wird insbesondere auch dadurch erreicht, dass das Einsatzteil eine Wandstärke aufweist, welche größer ist als eine Wandstärke des Einsatzteils in einem Bereich von etwa 0,4 bis 0,8, bevorzugt in einem Bereich von etwa 0,5 bis 0,7 liegt. Zweckmäßigerweise trägt die relativ große Wandstärke des Einsatzteils natürlich auch zu einer größeren Festigkeit bzw. Steifigkeit des gesamten Haltebocks bei.

Gemäß einer bevorzugten Ausführungsform erstreckt sich der Versteifungsabschnitt im Wesentlichen parallel zur Hochachse, wobei sich der Verbindungsabschnitt im Wesentlichen senkrecht dazu erstreckt. Bevorzugt weisen also der Versteifungsabschnitt und der Verbindungsabschnitt im Wesentlichen einen 90°-Winkel zu einander auf. Alternativ kann der Winkel aber auch größer oder kleiner als 90° sein, beispielsweise in einem Bereich von etwa 80 bis 130°, vorzugsweise 85 bis 100°.

Entlang einer Fahrtrichtung bemisst sich eine Länge des Haltebocks im eingebauten Zustand. In der Regel entspricht eine Länge des Anordnungsbereichs in etwa einer Länge des Haltebocks. In bevorzugen Ausführungsformen liegt ein Verhältnis einer Länge des Verbindungsabschnitts zu einer Länge des Anordnungsbereichs in einem Bereich von etwa 0,1 bis 0,5, zweckmäßigerweise in einem Bereich von etwa 0,2 bis 0,3. Ein Verhältnis einer Länge des Versteifungsabschnitts (parallel zur Hochachse) zu einer Länge des Verbindungsabschnitts (senkrecht zur Hochachse) liegt in bevorzugten Ausführungsformen bei etwa 1,1 bis 1,3.

Gemäß einer bevorzugten Ausführungsform weitet sich der Haltebock vom Anordnungsbereich weg entlang der Hochachse auf, wobei sich der Versteifungsabschnitt bevorzugt in den aufgeweiteten Bereich hinein erstreckt. Zweckmäßigerweise liegt ein Verhältnis der Breite des verjüngten Bereichs zur Breite des aufgeweiteten Bereichs bei etwa 0,5 bis 0,95, vorzugsweise 0,7 bis 0,9. Das Verjüngen in Richtung des Anordnungsbereichs bringt den Vorteil mit sich, dass dadurch Material eingespart werden kann. Außerdem wird eine sehr steife Struktur geschaffen und es wird ermöglicht, einen derartigen Haltebock auch an sehr schmalen (Längs-) Trägern zu befestigen. Dass sich der Versteifungsabschnitt bis in den aufgeweiteten Bereich hinein erstreckt, bringt den Vorteil mit sich, dass zum einen der aufgeweitete Bereich mit versteift wird und zum anderen gerade diese Übergangszone mit verstärkt ist. So hat sich gezeigt, dass es gerade im Bereich von derartigen (Querschnitts-)Übergängen zu Stauchungen oder Knickungen von Bauteilen kommen kann. Besonders vorteilhaft ist es daher, dass das Einsatzteil auch in diesem Bereich zu einer Versteifung des Haltebocks beiträgt.

Gemäß einer bevorzugten Ausführungsform liegt ein Verhältnis einer Breite des verjüngten Bereichs zum aufgeweiteten Bereich bei etwa 0,7 bis 0,9. Diese Werte stellen einen idealen Kompromiss zwischen einem möglichst geringem Materialeinsatz, bei gleichzeitig höchst möglicher Steifigkeit, dar.

Zweckmäßigerweise ist unterhalb des inneren Abschnitts des Einsatzteils eine Befestigungsöffnung für eine Fahrwerkskomponente angeordnet. Der Bereich unterhalb des inneren Abschnitts ist äußerst steif und stellt eine sehr streife Anbindungsmöglichkeit für Fahrwerkskomponenten, wie beispielsweise ein Federelement, dar. Mit Vorteil sind im Haltebock weitere Befestigungsöffnungen zur Anordnung von Fahrwerkskomponenten, wie beispielsweise eines Längsträgers, vorgesehen. Insbesondere bevorzugt ist beispielsweise eine Lagerstelle, in Form einer entsprechenden Öffnung oder Bohrung, im aufgeweiteten Bereich angeordnet, welche der Lagerung eines Längslenkers dient. Der aufgeweitete Bereich stellt aufgrund seiner Dimensionierung auch die nötige Lagerbreite bereit.

Zweckmäßigerweise weist das Einsatzteil zumindest eine Ausnehmung oder Öffnung auf, wodurch mit Vorteil bewirkt wird, dass weiter Gewicht angespart werden kann. Derartige Ausnehmungen oder Öffnungen können beispielsweise oval, rund, insbesondere kreisrund, oder auch eckig sein. Zweckmäßigerweise sind derartige Ausnehmungen im Verbindungsabschnitt und/oder im Versteifungsabschnitt vorgesehen.

Weitere Vorteile und Merkmale ergeben sich aus der nachfolgenden Beschreibung einer bevorzugten Ausführungsform des Haltebocks mit Bezug auf die beigefügten Figuren.

Es zeigen:
- Figur 1:: eine perspektivische Darstellung einer Ausführungsform eines Haltebocks;
- Figur 2:: eine weitere perspektivische Darstellung der aus Figur 1 bekannten Ausführungsform des Haltebocks;
- Figur 3:: eine Seitenansicht der aus Figur 1 bekannten Ausführungsform des Haltebocks;
- Figur 4:: eine perspektivische Darstellung eines Beispiels einer Montageplatte.

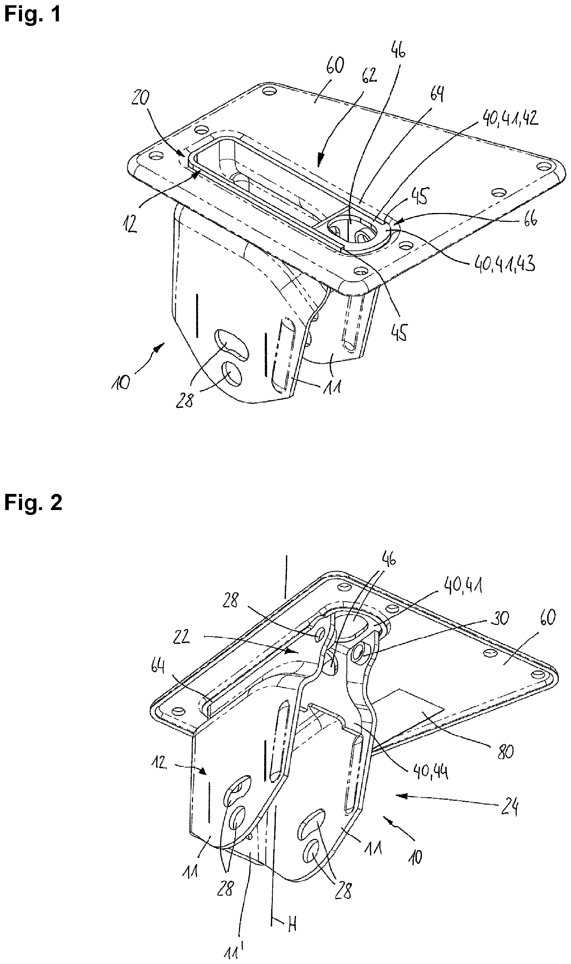

**Fig. 1** zeigt in einer perspektivischen Darstellung (von schräg oben) ein Haltesystem, umfassend einen Haltebock 10, welcher zwei Seitenwände 11 umfasst, sowie ein Tragelement 60. Die Seitenwände 11 umfassen verschiedenste Befestigungsöffnungen 28, welche beispielsweise der Lagerung eines Längslenkers (hier nicht gezeigt) dienen. Der Haltebock 10 ist über einen Anordnungsbereich 20 mit dem Tragelement 60, welches in der hier gezeigten Ausführungsform eine Montageplatte 60 ist, verbunden. Im Bereich des Anordnungsbereichs 20 ist ein Einsatzteil 40 erkennbar, welches den Anordnungsbereich 20 mit formt. Insbesondere sind ein Verbindungsabschnitt 41 sowie ein innerer Abschnitt 42 und ein äußerer Abschnitt 43 erkennbar. Deutlich wird insbesondere, dass eine Außenkontur 12 der Seitenwände 11 durch den äußeren Abschnitt 43 des Einsatzteils 40 weitergeführt wird, sodass im Zusammenspiel mit einem Steg/Bund 64 der Montageplatte 60 ein umlaufender Spalt 66 geformt wird, welcher ideal zum Verschweißen des Haltebocks 10 mit der Montageplatte 60 geeignet ist, da zum einen eine große Schweißfläche zur Verfügung gestellt wird und zum anderen eine derartige Schweißnaht ideal in die gesamte Konstruktion/Struktur eingebettet ist. Hinsichtlich des Einsatzteils 40 sei noch erwähnt, dass dessen innerer Abschnitt 42 und dessen äußerer Abschnitt 43 vorteilhafterweise über einen Absatz 45 verbunden sind, welcher in etwa einer Wandstärke der Seitenwände 11 entspricht. Durch diese Struktur wird eine ideale Positionierung des Einsatzteils 40 innerhalb der Seitenwände 11 ermöglicht. Die Montageplatte 60 ist noch mit nicht weiter gekennzeichneten Befestigungsöffnungen versehen, welche zweckmäßigerweise der Anordnung des Haltesystems, umfassend die Montageplatte 60 und den Haltebock 10, an einen hier nicht gezeigten Rahmen, beispielsweise einen Längsträger eines Nutzfahrzeuganhängers, dienen.

**Fig. 2** zeigt das aus Figur 1 bekannte Haltesystem aus einer anderen Perspektive, nämlich im Wesentlichen von schräg unten, wobei eine Hochachse mit dem Bezugszeichen H gekennzeichnet ist. In dieser Perspektive ist erkennbar, dass die beiden Seitenwände 11 über eine Querwand 11' verbunden sind. Deutlich zu sehen ist außerdem, dass der Haltebock 10 einen verjüngten Bereich 22 und einen aufgeweiteten Bereich 24 umfasst. Das Einsatzteil 40 umfasst neben dem bereits bekannten Verbindungsabschnitt 41 einen sich im Wesentlichen senkrecht dazu erstreckenden Versteifungsabschnitt 44, welcher sich mit Vorteil in der hier gezeigten Ausführungsform bis in den aufgeweiteten Bereich 24 hinein erstreckt. Insbesondere ist der Übergangsbereich zwischen den verjüngten Bereich 22 und dem aufgeweiteten Bereich 24 durch den Versteifungsabschnitt 44 mit verstärkt. In dieser Perspektive ist auch der Steg bzw. Bund 64 besser erkennbar, welcher mit Vorteil den Spalt 66 bildet, der in der Figur 1 gezeigt ist. Im Zusammenhang mit der Figur 1 wurde erwähnt, dass das Verschweißen zweckmäßigerweise von oben erfolgt. Alternativ oder zusätzlich kann das Verschweißen des Haltebocks 10 auch von unten erfolgen, beispielsweise an der Unterseite des Stegs/Bundes 64. In dieser Perspektive ist noch erkennbar, dass der Haltebock 10 über eine Verstrebung 80 seitlich abgestützt ist, wobei diese Abstützung hier relativ zur Montageplatte 60 erfolgt. Die Verstrebung könnte aber auch am Rahmen oder an einem anderen Teil des Fahrzeugs ansetzen. Unterhalb des Verbindungsabschnitts 41 weist der verjüngte Bereich 22 eine Befestigungsöffnung 28 auf, welche in der hier gezeigten Ausführungsform zusätzlich mit einem Befestigungsbund 30 versehen ist. Zur weiteren Gewichtsersparnis weist das Einsatzteil 40 zwei Ausnehmungen bzw. Öffnungen 46 auf.

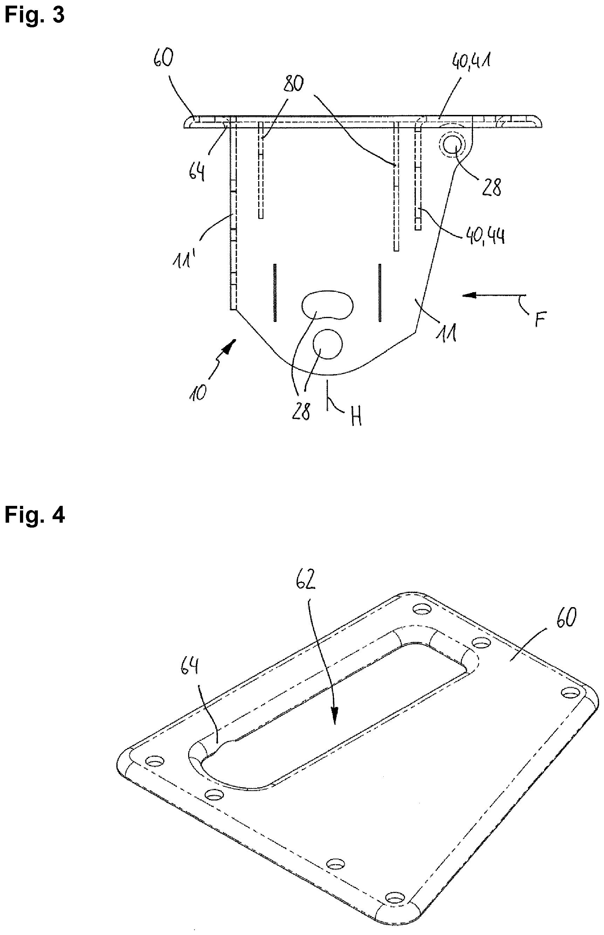

**Fig. 3** zeigt die aus den Figuren 1 und 2 bekannte Ausführungsform eines Haltesystems in einer Seitenansicht. Erkennbar ist hier insbesondere die im Wesentlichen rechtwinklige Struktur des Einsatzteils 40, umfassend den Verbindungsabschnitt 41 und den Versteifungsabschnitt 44. Gestrichelt angedeutet ist der Verlauf der Verstrebung 80, welche in der hier gezeigten Ausführungsform zwei Träger umfasst. Weiter erkennbar ist die Ausgestaltung des Bundes bzw. Stegs 64, welcher sich in Richtung des Haltebocks 10 erstreckt. Mit dem Bezugszeichen F ist eine Fahrtrichtung angedeutet. Im eingebauten Zustand des Haltebocks 10 würde sich zum Beispiel ein Längsträger nach rechts erstrecken.

**Fig. 4** zeigt in einer Draufsicht ein Beispiel einer Montageplatte 60, umfassend eine Montageöffnung 62, welche mit einem Steg bzw. Bund 64 versehen ist. Dieser Steg bzw. Bund 64 kann beispielsweise durch ein umformendes Fertigungsverfahren hergestellt sein. Die Montageplatte 60 weist an ihren Rändern verschiedene Öffnungen bzw. Bohrungen auf, welche der Befestigung der Montageplatte 60, beispielsweise an einem Fahrzeugrahmen bzw. einem Längsträger, dienen. Bevorzugt ist die Montageplatte 60 aus Stahl gefertigt, wobei das Vorsehen der Montageöffnung 62 insbesondere als vorteilhaft zu erwähnen ist, da es entscheidend zur Gewichtsreduktion der Montageplatte 60 beiträgt. Gleichzeitig wird durch das Vorsehen des Stegs bzw. Bundes 64 die Steifigkeit der Montageplatte 60 signifikant erhöht.

### Bezugszeichenliste

- 10: Haltebock
- 11: Seitenwand
- 12: Außenkontur
- 20: Anordnungsbereich
- 22: verjüngter Bereich
- 24: aufgeweiteter Bereich
- 28: Befestigungsöffnung
- 30: Befestigungsbund
- 40: Einsatzteil
- 41: Verbindungsabschnitt
- 42: innerer Abschnitt
- 43: äußerer Abschnitt
- 44: Versteifungsabschnitt
- 45: Absatz
- 46: Ausnehmung, Öffnung
- 60: Tragelement, Montageplatte, Rahmenteil
- 62: Montageöffnung
- 64: Steg/Bund
- 66: Spalt
- 80: Verstrebung
- H: Hochachse
- F: Fahrtrichtung

## Patentansprüche

1. Haltebock (10), insbesondere von einem oder für einen Nutzfahrzeuganhänger,
umfassend zwei Seitenwände (11), welche sich im Wesentlichen entlang einer Hochachse (H) erstrecken und welche einen Anordnungsbereich (20) zum Anordnen des Haltebocks (10) an einem Tragelement (60) formen,
wobei der Haltebock (10) ein Einsatzteil (40) umfasst, welches einen Verbindungsabschnitt (41) und einen Versteifungsabschnitt (44) aufweist,
wobei der Verbindungsabschnitt (41) den Anordnungsbereich (20) mit ausbildet,
wobei sich der Versteifungsabschnitt (44) zur Versteifung zwischen den Seitenwänden (11) erstreckt,
wobei der Verbindungsabschnitt (41) einen inneren Abschnitt (42) aufweist, welcher sich im Anordnungsbereich (20) zwischen den Seitenwänden (11) erstreckt,
**dadurch gekennzeichnet, dass** der Verbindungsabschnitt (41) einen äußeren Abschnitt (43) aufweist, welcher im Anordnungsbereich (20) an den Seitenwänden (11) anliegt,
wobei der äußere Abschnitt (43) und der innere Abschnitt (42) des Einsatzteils (40) über einen Absatz (45) verbunden sind, wobei eine Größe des Absatzes (45) im Wesentlichen einer Wandstärke der Seitenwand bzw. -wände (11) entspricht.

2. Haltebock (10) nach Anspruch 1,
wobei der äußere Abschnitt (43) eine Außenkontur (12) der Seitenwände (11) schließt.

3. Haltebock (10) nach einem der vorhergehenden Ansprüche,
wobei sich der Versteifungsabschnitt (44) im Wesentlichen parallel zur Hochachse (H) erstreckt und/oder wobei sich der Verbindungsabschnitt (41) im Wesentlichen senkrecht zur Hochachse (H) erstreckt.

4. Haltebock (10) nach einem der vorhergehenden Ansprüche,
wobei ein Verhältnis einer Länge des Verbindungsabschnitts (41) zu einer Länge des Anordnungsbereichs (20) in einem Bereich von etwa 0,1 bis 0,5, vorzugsweise in einem Bereich von etwa 0,2 bis 0,3 liegt, und/oder wobei ein Verhältnis einer Länge des Versteifungsabschnitts (44) zu einer Länge des Verbindungsabschnitts (41) in einem Bereich von etwa 1,1 bis 1,3 liegt.

5. Haltebock (10) nach einem der vorhergehenden Ansprüche,
wobei sich der Haltebock (10), vom Anordnungsbereich (20) weg, entlang der Hochachse aufweitet, und
wobei sich der Versteifungsabschnitt (44) bevorzugt bis in den aufgeweiteten Bereich (24) hinein erstreckt.

6. Haltebock (10) nach Anspruch 5,
wobei ein Verhältnis einer Breite eines verjüngten Bereichs (22) zum aufgeweiteten Bereich (24) bei etwa 0,7 bis 0,9 liegt.

7. Haltebock (10) nach einem der vorhergehenden Ansprüche,
wobei unterhalb des inneren Abschnitts (42) eine Befestigungsöffnung (28) für eine Fahrwerkskomponente angeordnet ist.

8. Haltebock (10) nach einem der vorhergehenden Ansprüche,
wobei das Einsatzteil (40) zumindest eine Ausnehmung oder Öffnung (46) aufweist.

## Claims

1. A holding mount (10), in particular of or for a commercial vehicle trailer, comprising two side walls (11) which extend substantially along a vertical axis (H) and which form an arrangement region (20) for arranging the holding mount (10) on a load-bearing element (60),
the holding mount (10) comprising an insert part (40) which has a connecting section (41) and a reinforcing section (44),
the connecting section (41) also configuring the arrangement region (20), the reinforcing section (44) extending between the side walls (11) for the reinforcement purposes,
the connecting section (41) having an inner section (42) which extends between the side walls (11) in the arrangement region (20),
**characterized in that** the connecting section (41) has an outer section (43) which bears against the side walls (11) in the arrangement region (20), the outer section (43) and the inner section (42) of the insert part (40) being connected via a shoulder (45), a size of the shoulder (45) corresponding substantially to a wall thickness of the side wall or walls (11).

2. The holding mount (10) as claimed in claim 1,
the outer section (43) closing an outer contour (12) of the side walls (11).

3. The holding mount (10) as claimed in one of the preceding claims,
the reinforcing section (44) extending substantially parallel to the vertical axis (H) and/or the connecting section (41) extending substantially perpendicularly with respect to the vertical axis (H).

4. The holding mount (10) as claimed in one of the preceding claims,
a ratio of a length of the connecting section (41) to a length of the arrangement region (20) lying in a range of approximately from 0.1 to 0.5, preferably in a range of approximately from 0.2 to 0.3, and/or
a ratio of a length of the reinforcing section (44) to a length of the connecting section (41) lying in a range of approximately from 1.1 to 1.3.

5. The holding mount (10) as claimed in one of the preceding claims,
the holding mount (10) widening along the vertical axis away from the arrangement region (20), and
the reinforcing section (44) extending preferably as far as into the widened region (24).

6. The holding mount (10) as claimed in claim 5,
a ratio of a width of a tapered region (22) to the widened region (24) lying at approximately from 0.7 to 0.9.

7. The holding mount (10) as claimed in one of the preceding claims,
a fastening opening (28) for a chassis component being arranged below the inner section (42).

8. The holding mount (10) as claimed in one of the preceding claims,
the insert part (40) having at least one recess or opening (46).

## Revendications

1. Support de maintien (10), en particulier provenant de ou destinée à une remorque de véhicule utilitaire,
comprenant deux parois latérales (11) qui s'étendent sensiblement le long d'un axe vertical (H) et qui forment une zone d'agencement (20) pour agencer le support de maintien (10) sur un élément porteur (60),
dans lequel
le support de maintien (10) comprend un élément d'insert (40) ayant une partie de liaison (41) et une partie de raidissement (44),
la partie de liaison (41) contribue à former la zone d'agencement (20),
la partie de raidissement (44) s'étend entre les parois latérales (11) pour assurer le raidissement,
la partie de liaison (41) comprend une partie intérieure (42) s'étendant dans la zone d'agencement (20) entre les parois latérales (11),
**caractérisé en ce que** la partie de liaison (41) comprend une partie extérieure (43) qui s'appuie contre les parois latérales (11) dans la zone d'agencement (20),
la partie extérieure (43) et la partie intérieure (42) de l'élément d'insert (40) étant reliées par un épaulement (45), une taille de l'épaulement (45) correspondant sensiblement à une épaisseur de paroi de la ou des parois latérales (11).

2. Support de maintien (10) selon la revendication 1,
dans lequel la partie extérieure (43) referme un contour extérieur (12) des parois latérales (11).

3. Support de maintien (10) selon l'une des revendications précédentes, dans lequel la partie de raidissement (44) s'étend sensiblement parallèlement à l'axe vertical (H), et/ou la partie de liaison (41) s'étend sensiblement perpendiculairement à l'axe vertical (H).

4. Support de maintien (10) selon l'une des revendications précédentes, dans lequel un rapport d'une longueur de la partie de liaison (41) sur une longueur de la zone d'agencement (20) est dans une plage d'environ 0,1 à 0,5, de préférence dans une plage d'environ 0,2 à 0,3, et/ou
un rapport d'une longueur de la partie de raidissement (44) sur une longueur de la partie de liaison (41) est dans une plage d'environ 1,1 à 1,3.

5. Support de maintien (10) selon l'une des revendications précédentes, dans lequel le support de maintien (10) va en s'évasant le long de l'axe vertical en éloignement de la zone d'agencement (20), et
la partie de raidissement (44) s'étend de préférence jusqu'à l'intérieur de la zone évasée (24).

6. Support de maintien (10) selon la revendication 5,
dans lequel un rapport d'une largeur d'une zone rétrécie (22) sur la zone évasée (24) est d'environ 0,7 à 0,9.

7. Support de maintien (10) selon l'une des revendications précédentes, dans lequel une ouverture de fixation (28) pour un composant de châssis est disposée au-dessous de la partie intérieure (42).

8. Support de maintien (10) selon l'une des revendications précédentes, dans lequel l'élément d'insert (40) présente au moins un évidement ou une ouverture (46).
